# EUROPEAN PATENT APPLICATION

(11) **EP 1 903 359 A2**
(43) Date of publication of application: **26.03.2008**
(21) Application number: 06743502.4
(22) Date of filing: 19.05.2006
(51) Int. Cl.: G02B 6/00, B60Q 3/00, F21V 21/04

(54) **LIGHT FOR VEHICLE ROOFS**

(30) Priority: 02.06.2005 ES 200501327
(71) Applicant: GRUPO ANTOLIN-INGENIERIA, S.A., 09007 Burgos (ES)
(72) Inventor: OLIVAN AHEDO, Carolina, E-09007 Burgos (ES); PUENTE RODRIGUEZ, Juan Jose, E-09007 Burgos (ES)
(74) Representative: Esteban Perez-Serrano, Maria Isabel
(86) International application number: PCT/ES2006/070064
(87) International publication number: WO 2006/128941

(57) **Abstract**

The present invention refers to a luminaire for vehicle roofs which achieves a uniform light emission over its whole surface stemming from light emitting means disposed round the perimeter on a layered panel. The layered panel is conformed of an outer extractor sheet and a lower diffuser sheet. The light emission around the perimeter on the layered panel may be executed continuously by means of a light guide, which distributes the light emitted by a single light source, or else by means of a plurality of regularly distributed point light sources. The panel and light emitters are housed in the structure of the vehicle supported by the roof panel and by the trim. If the luminaire is provided with a transparent panel it may be used as a sun roof.

## Description

### OBJECT OF THE INVENTION

The present invention relates to a luminaire for vehicle roofs, which achieves a uniform and homogeneous distribution in the interior of the vehicle passenger compartment. The luminaire carries out a distribution of the beams of light, which access the interior of the luminaire perimetrally, either continuously along its whole perimeter or else at points distributed around the perimeter of the luminaire.

The luminaire takes the form of a layered structure made up of a series of sheets which have optical properties appropriate to the desired purpose. In addition, it has light emitting means that are spread around the perimeter of the layered panel.

The whole above assembly is fixed to the roof of the vehicle, preferably at the periphery of said assembly.

The performance of the luminaire is the result of the combination of the layered structure and the light sources used.

It is also characterised by the use of diffuser sheets that give rise to a distribution of a uniform soft light, thereby creating environments that may be personalised by the user.

### BACKGROUND OF THE INVENTION

In the area of visualisation by means of back- lighted screens, one of the most important problems is that of achieving homogeneous lighting.

The use of artificial light sources such as bulbs or fluorescent tubes situated just behind a translucent sheet is not the best solution as, even if we make use of a large number of these light sources, we can still distinguish where the light sources are situated and where not.

The result is lighting that is not homogeneous and, what is more, is expensive when the number of light sources is high.

We already know PCT patent application with publication number WO0171248 in which a lighting structure is proposed based on light guides.

This lighting structure is applicable to advertising screens in which a billboard has to be back-lighted or also, for example, a liquid crystal display.

The light guide has an elongated configuration and is housed in a cavity for projecting the largest amount of light possible to what is called the optical cavity; i.e. the cavity which forms a box with a reflecting and diffusing base protected by a diffuser sheet.

In this way, the light that enters this cavity is distributed by the rear face of the diffuser sheet and issues to the exterior.
This type of solution only permits lighting with artificial light and what is sought is the homogeneity of light emission.

The aim, however, of the patent with publication number US6267492 is the personalisation or adjustment of the mode of lighting, as well as the directing.

The device consists of a directional support which makes use of light guides that may emit either a bright focalised light or else provide a diffuse light.

The emitting end may be composed of flexible light guides that enable it to pass through twisting places. Certain modifications in the light guide establish particular modes of lighting that adapt to the needs.

In the afore-mentioned devices, if installed in the roof of a vehicle for interior lighting, natural light is unable to pass. As a result, it is not possible to see through this element either.

Vehicle trims are curved. The nature of the afore-mentioned devices does not allow them to adapt to the curving configurations imposed by such trims.

From the point of view of appearance, these light sources do not permit lighting arrangements aimed at creating environments.

Lastly, another great drawback is that of the requirements applicable to vehicle trims where it is necessary to pass tests, such as that of resistance to solar radiation or mechanical strength. Since the above-mentioned solutions do not have a rigid structure between the layers, some of these tests would not be passed.

The present invention establishes an area of considerable size for vehicle roofs that permits exterior light to pass into the vehicle while at the same time having one or more sources of artificial lighting for the interior of the vehicle.

### DESCRIPTION OF THE INVENTION

The present invention consists of a luminaire for vehicle roofs which covers an area of some size composed of a layered panel structure installed in the vehicle roof area.

The main area of the luminaire is composed of a layered panel structure consisting of an outer sheet that we will call the extractor sheet, and a lower diffuser sheet, between which there is a space that may be occupied by a transparent central intermediate sheet or simply left unoccupied.

In either case, it will be necessary to construe upper sheet as the outer one (given the normal location of its application in vehicle roofs) and lower sheet as the one disposed in the interior.

We refer to the extractor sheet as such because it is a sheet whose lower surface is reflectant to the rays inciding from below, while it allows the rays that might come from the exterior to pass.

Both sheets, the extractor and the diffuser, have micrometric configurations (0.5 to 100µm) in some of their faces, these configurations being, for instance, triangular or cylindrical prisms, and they are designed for directing or diffusing light, depending whether it is the case of the extractor or diffuser sheet, respectively.

Therefore; the advantages stemming from the luminaire that is the object of the invention lie in the use of the extractor and diffuser sheet, their relative arrangement, as well as the micrometric configurations executed on some of their faces and the fact of having light emitting means distributed around the perimeter of the layered panel.

In a complementary embodiment of the invention a central transparent sheet may be installed in the space between the extractor sheet and the diffuser sheet, said central transparent sheet having two functions: one, that of allowing the rays from the extractor sheet to pass through it until they reach the lower diffuser sheet; and the second function is that of permitting the passage of the rays of light coming from its edge originating from the artificial light source, so that they are reflected if they incide on the upper surface due to the extractor sheet, and if they incide on the lower surface, they are diffused due to the diffuser sheet, taking in any case the interior of the vehicle as the final objective.

The central sheet, furthermore, fulfils a structural function as its acts as a support between the two sheets (extractor and diffuser), so that the two sheets are prevented from caving in.

In another structural version, the layered panel may have a multilaminate configuration where, in any case, an upper extractor and a lower diffuser sheet are required, in which transparent sheets are added above and below the extractor and diffuser sheets.

The placement of these additional layers adjacent to the extractor and diffuser layers would offer optical and structural advantages through conferring increased strength on the luminaire layered panel assembly with minimal thicknesses.

To the above assembly, it is possible to add on the upper surface of the luminaire an electrochromic layer that enables it to be actuated on so that it darkens at discretion, which would permit the interior environment of the vehicle to be personalised, as a result of which the luminaire would have means of concealment based on the actuation on the electrochromic layer.

Besides the layered panel described, the luminaire has light emitting means spread around the perimeter of the layered panel responsible for the emission of light to the interior of the space between the extractor and diffuser sheets.

The emitting means may be a light guide arranged perimetrally, matching up with the edge of the transparent central sheet supplied at one end at least with a minimum of one point light source. In this case a side support is used to facilitate the installation of the layered panel with the light guide.

In another form of embodiment, the light emitting means is made up of a plurality of light sources spread around the perimeter of the panel.

Irrespective of whether the luminaire has a side support or not, i.e. of the type of light emitter used, the luminaire is installed in the vehicle roof area preferably in two ways:
- By means of bonding the upper sheet of the layered panel or side support to a roof element, which may either be a transparent element or the sheet metal area.
- By means of a mechanical anchorage to the sheet metal of the roof by the lower sheet of the panel or by the support.
- Or by means of a eombination of the two preceding methods.

In the event of the installation of the luminaire in the roof being done by means of bonding in which the roof element is transparent, in order to prevent the bead of adhesive being visible that area would be darkened so that from the outside of the vehicle a black-coloured frame is seen.

As we have mentioned previously, in one version of the invention, the layered panel structure is maintained as such thanks to a perimeter support structure. This fastening may be supplemented or executed alternatively by means of transparent adhesives that do not modify the required reflection properties. One of the possible methods of anchorage consists of making use of a piece with an essentially C-shaped cross section which encompasses the set of sheets perimetrally, fulfilling the functions of a support frame, which we will call the side support.
The side support is made up of an upper and a lower piece, fastened together by various means, for example, by means of clips. The side support houses a light guide between both pieces of the support perimeter, as well as the edge of the set of sheets, the whole assembly being arranged and fixed between the dark or transparent roof and the interior trim.

In an alternative embodiment, the anchorage of the assembly made up of the layered panel structure and the side support is executed superiorly to the transparent element of the roof, whilst inferiorly it is fixed by the actual sheet metal of the roof and the trim, using in this case a one-piece lateral support open on one face.

In the event of using a guide as the light emitting means, the light source may be, at least, one LED provided at one end, at least, of the light guide.

One constructional form that may be presented by the light guide and the LED used as the light source is that the latter is built into the light guide, through over-injecting the light guide on top of the LED. In this way, the guide and LED assembly is minimal, so that its fitting and ease of installation in the interior of the vehicle is much greater than if the LED were not built into the light guide.

The light guide gives out through its side walls along its whole length a uniform emission that extends along the whole perimeter of the central sheet, or else alternatively there are local point emissions inciding on this same perimeter.

In the latter case it is possible to situate a plurality of LEDs around the edge of the central transparent sheet which would correspond to the above-mentioned point emissions. In this case it is possible to power supply means for the LEDs along the perimeter. Said LED power supply means may also be a pair of electrical conducting strips or else by means of a single conductor, connecting LEDs in series. These same strips may act as a support for the LEDs.

In this form of lighting, along with the LEDs, the layered panel and the LED supply means assembly is installed in the roof area by means of some of the methods described.

With this laminar structure it is possible to make the luminaire adapt to the curving surface configuration of the roof. There is also a possibility of predetermining, within certain limits, the degree of transparency of the luminaire as well as of combining the entry of natural light with artificial lighting adjusted for intensity according to the area of the luminaire.

Once the assembly is formed, the number of components used is very small and a highly compact element is achieved that requires no additional fastening means, while the installation processes are simple and straightforward.

With regard to the results obtained, the light entering the interior of the vehicle is distributed uniformly even though the light emission is point source. It suffices to consider a point emission obtained by means of one LED and then guided until it is distributed all round the perimeter. This light thus introduced into the transparent central sheet is in turn distributed all over the area inciding on the diffuser sheet.

In this case, the number of electrical circuits and connections needed is small. The number of failures is also very low since use is not made of rows of emitting LEDs, bulbs, fluorescent tubes or electroluminescent strips, which involve a greater complexity.

The reduction of light emitting sources also reduces the sources of heat and thereby the need to provide supplementary heat dissipation means.

Even in the event of a source of hot light emission, along with the light guide, as is a bulb, this may be separated and located at a point away from the illuminated area. This location may coincide with a place that is not sensitive to heat as it is not necessary for the light emitting source to be close to the layered structure responsible for diffusing the light.

This layered structure is solid and, therefore, gives rise to a sturdy assembly that is resistant to handling, installation and removal, vibration, environmental humidity and temperature conditions, minor impacts....

Thanks to the optical characteristics of the extractor and diffuser sheets, which permit the passage of light from the exterior, as well as of the possible additional transparent sheets in a multilaminate configuration, the luminaire that is the object of the invention may be configured as a built-in panoramic roof, fulfilling the dual function of a luminaire and a panoramic roof.

Lastly, we should mention that the area covered by the luminaire may be wholly or partly occupied, either with accessories as a roof console or else with the roof cover, without the invention being modified.

### DESCRIPTION OF THE DRAWINGS

The present descriptive report is supplemented with a set of drawings illustrative of the preferred specimen embodiment but never restrictive of the scope of the invention.

Figure 1 is a diagrammatic representation of a specimen vehicle roof seen both from the interior and from the exterior, in which we may distinguish a possible configuration of the luminaire, elongated with rounded ends, covering the central part of the roof.

Figure 2 shows a section of the luminaire close to the edge according to a specimen embodiment which makes use of a perimeter light guide.

Figure 3 shows a close view of the entry of the light guide into the interior of the perimeter support structure. In this specimen embodiment there is a single light emitting source.

Figure 4 shows another specimen embodiment which makes use of multiple light emitting points, each of them supplied by a pair of electricity conducting strips common to all the lighting points.

Figure 5 is a close view showing a specimen lighting point situated at an entry to the layered assembly.

Figure 6 is a cross section of an edge of the luminaire in its installation in the roof, in one form of embodiment of the invention, where the emitting means is a light guide and in which the layered panel and light guide assembly are fixed by a side support.

Figure 7 shows a cross section of an edge of the luminaire in its installation in the roof, in an alternative embodiment of the invention, where the layered panel and light guide assembly uses a one-piece side support open on one side.

Figure 8 shows a cross section of the edge of the luminaire in its installation in the roof, in the event of a plurality of sources distributed around the perimeter being used as light emitting means.

Figure 9 shows a cross section of the edge of the luminaire in its installation in the roof, in the event of the layered panel adopting a multilaminate configuration.

### DETAILED DESCRIPTION OF VARIOUS MODES OF EMBODIMENT

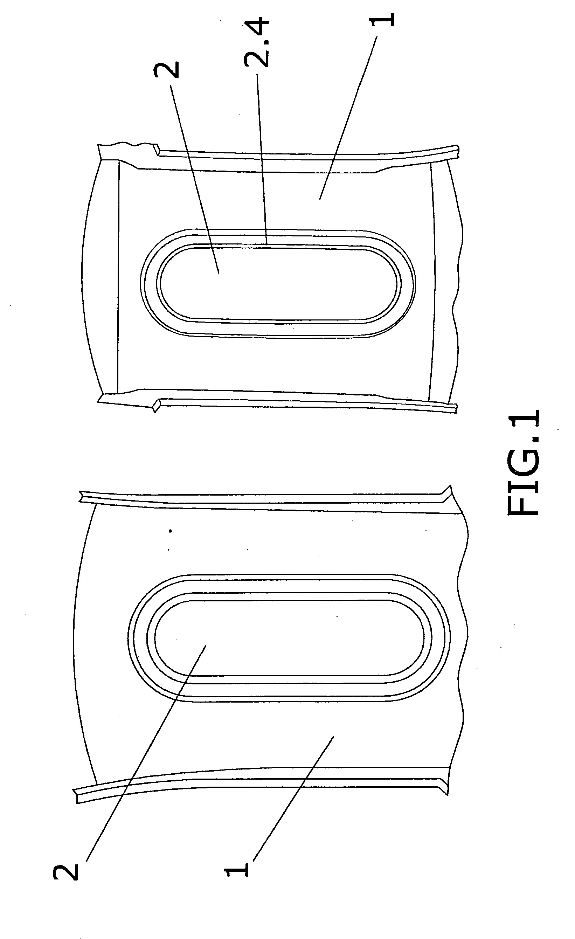

Figure 1 is a view of a roof (1) both from the interior and from the exterior of the vehicle showing a specimen embodiment of a luminaire (2) according to the present invention.
   In this view we distinguish a particular configuration of a roof trim (1) and the central layout of the luminaire (2).

In this central layout it is possible for part of the area of the luminaire to be occupied by a console or other ancillary element. In this case the invention does not change as what changes is merely the projection configuration of the luminaire (2).

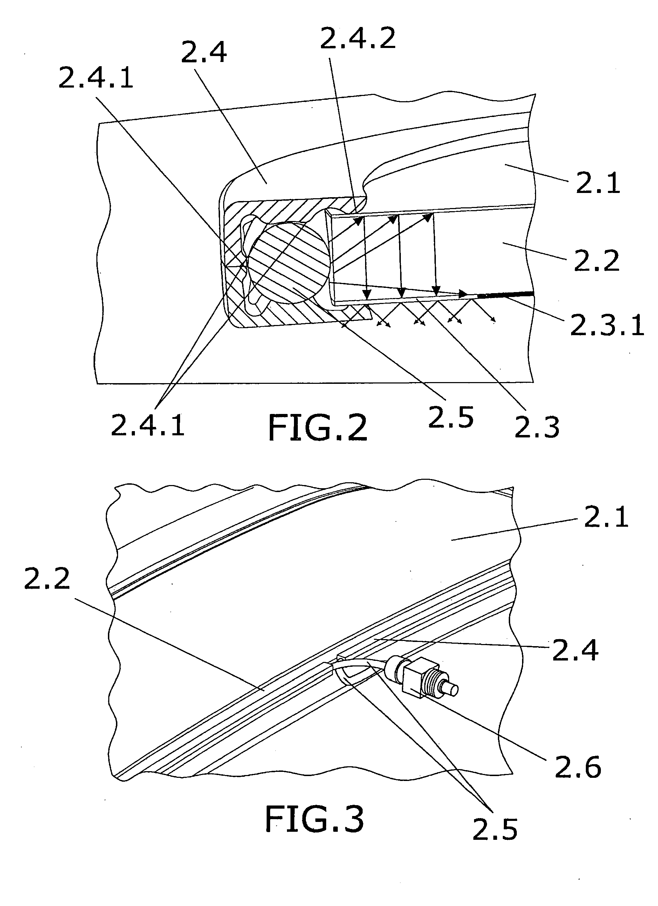

This luminaire (2) presents a layered structure in its whole area, as is shown in the figure 3. The layered structure is composed of at least of an upper sheet (2.1), referred to in the description as the extractor sheet, a transparent central sheet (2.2), and a lower diffuser sheet (2.3).

This assembly of layered sheets is encompassed perimetrally by a lateral support (2.4) configured in its cross section in the form of a "C". This support is provided with inner shoulders (2.4.1) for retaining (2.5) the light guide which runs parallel to the edge of the set of sheets (2.1, 2.2, 2.3) and for retaining (2.4.2) the actual sheets (2.1, .2.2, 2.3).

The lateral support (2.4) may be formed of an upper and of a lower piece which are fastened to each other, for example by means of clips, and the interior space defined between the two upper and lower pieces houses the light guide and the perimetral edge of the assembly of layered sheets.

In this same figure the direction of transmission of the different beams of light stemming from the light guide (2.5) are represented by means of arrows.

The light guide (2.5) emits beams of light through its walls which enter through the edge of the transparent central sheet (2.2). Some of these beams are transmitted upwards and others downwards. The beams that are transmitted upwards eventually incide on the lower reflectant surface of the upper sheet (2.1). These beams change their path and are then directed downwards.

One and the other rays are transmitted by way of the interior of the transparent central (2.2) and end up inciding on the lower sheet (2.3) without issuing to the exterior via the upper sheet (2.1).

As these beams of light incide on the lower diffuser sheet (2.3), the light passes to the interior of the passenger compartment in different directions due to the effect of refraction producing a very soft light of application in devices of this type where the aim is to create a pleasant environment.

In one version of the invention, the diffuser sheet is interrupted in certain areas in which another type of sheet (2.3.1) is fitted, for example one that concentrates the light, producing optical effects. An example of such a sheet may be one which produces the same effects as a Fresnel lens.

The light that is transmitted to the guide (2.5), as is shown in figure 3, comes in this example from a single source (2.6): a LED.

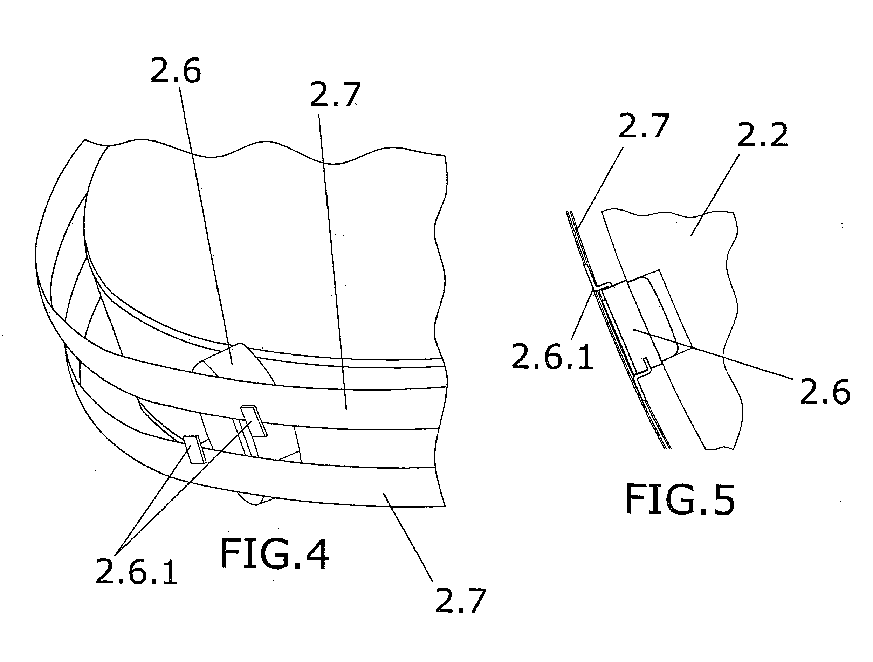

There are other modes of execution, as is shown in figure 4, in which instead of there being a continuous supply of light it is provided by a plurality of lighting points distributed all around the perimeter of the layered structure.

Figure 4 shows only a portion close to the edge of the layered structure where two wires (2.7) run on the exterior by way of conductor strips on which the contact pads (2.6.1) of the light source make contact.

In this mode of execution it is the actual conductor strips (2.7) that act as supports for the point light sources (2.6).

There is a particular mode of execution shown in figure 5 in which the point light source (2.6) coincides with an inlet in the transparent central (2.2). The representation offered does not show either the upper extractor sheet (2.1) or the lower diffuser (2.3), but the slotting in the central sheet (2.2) is depicted. The use of LEDs for the open angle light source (2.6) reduces the number of LEDs required to cover the whole of the perimeter thereby achieving uniform lighting over the whole area of the luminaire (2).

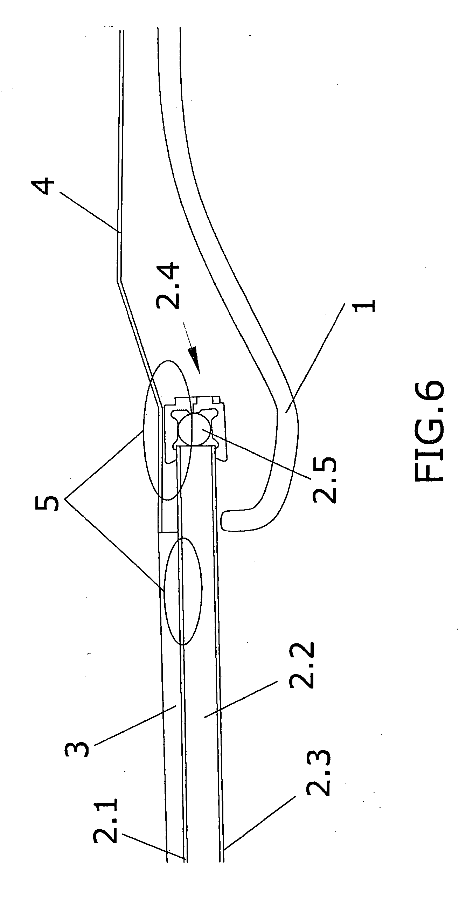

Figure 6 shows a representation of a section of the edge of the luminaire in its installation in the roof, wherein the light emitting means is a guide (2.5), the panel assembly (2.1, 2.2 and 2.3) being layered and the guide held by a side support (2.4) formed of two pieces. The whole above assembly is fitted by its side edge between the roof panel (4) and the trim (1), with the option of using either of the two bonding areas (5) marked, i.e. attachment by means of the bonding of the upper sheet (2.1) to the transparent element (3), and/or by means of the bonding of the upper part of the side support (2.4) to the roof panel (4).

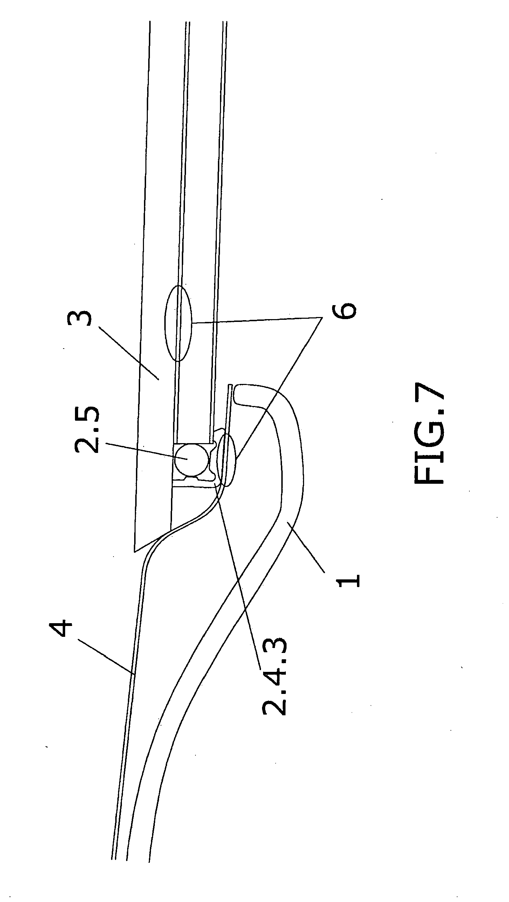

Figure 7 shows an alternative form of execution, where we observe that the layered panel (2.1, 2.2, 2.3) and the guide light assembly is fixed by a lateral support (2.4.3) open on one side, being fitted between the transparent element (3) disposed on the upper part, whilst the roof panel (4) and the trim (1) are disposed at the lower part, and wherein the fastening is done in at least one of the bonding areas marked (6).

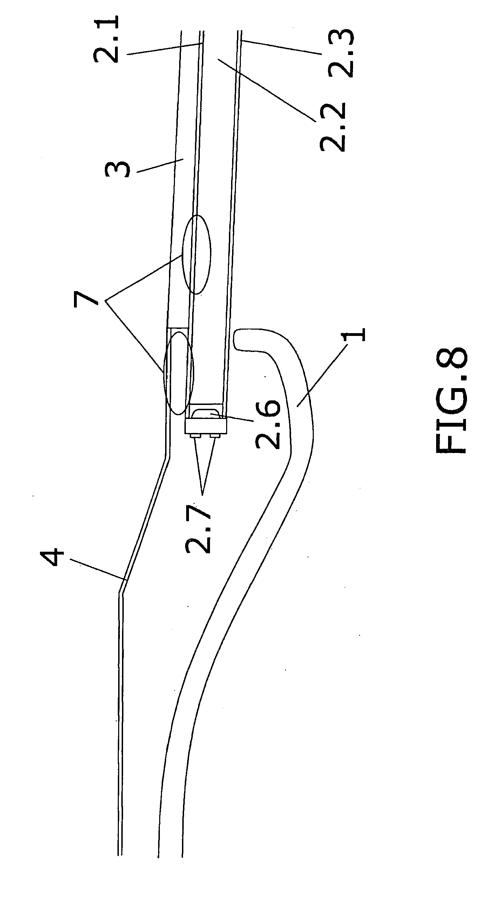

Figure 8 shows a representation of a cross section of the edge of the luminaire in its installation in the roof, in the event of using as a light emitting means a plurality of light sources arranged all round the perimeter, in this case LEDs (2.6), supplied by conductor strips (2.7). The luminaire is housed between the roof panel (3) and the trim (1), and wherein the fastening is done in at least one of the marked bonding areas (6), i.e. by means of bonding the upper sheet (2.1) and the roof panel (4), and/or by means of bonding the upper sheet and the transparent element (3).

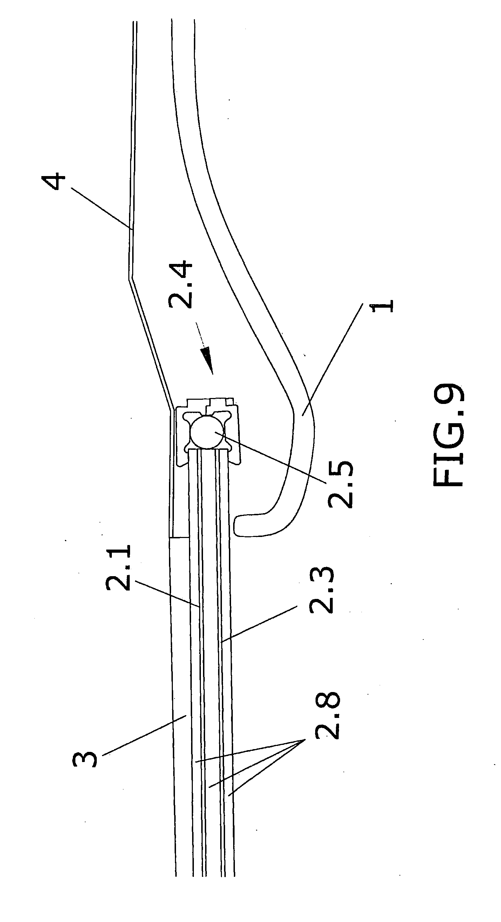

Figure 9 shows the layered panel of the luminaire which adopts a multilaminate configuration wherein a series of transparent sheets (2.8) are disposed above and below the extractor sheet (2.1) and the diffuser sheet (2.3), thus offering both structural and optical advantages, without altering the essence of the invention.

The luminaire is designed for installation in the roof of vehicles, although it is not confined to this arrangement as said installation may be carried out anywhere in the vehicle interior, whereby achieving a luminaire that projects uniform light in its whole area.

Considering the overall performance of the luminaire (2), it always has the feature that, when there is no lighting by the artificial light source or sources (2.6), it is possible to see through the three sheets and therefore the occupant may observe the exterior of the vehicle through the luminaire (2), providing that the outer face of the luminaire is not covered by the roof panel and said roof is provided with a transparent outer sheet.

This feature makes this type of luminaire (2) suitable for installation on vehicles fitted with a roof (1) with a transparent element, whether it is a fixed, large-sized, panoramic roof or a sliding sun roof.

## Claims

1. Luminaire for vehicle roofs **characterised in that** it consists of:
- A layered panel formed of two sheets, an upper extractor sheet (2.1) and a lower diffuser sheet (2.3), separated from each other, which have micrometric configurations on some of the surfaces of the sheets.
- Light emitting means distributed around the perimeter of the layered panel, which emit light towards the interior of the space between the above sheets.
- Means of fastening the luminaire in the area of the roof.

2. Luminaire for vehicle roofs according to claim 1, **characterised in that** between the upper extractor sheet (2.1) and the lower diffuser one a transparent central sheet (2.2) is disposed which acts as a support between the two foregoing sheets, besides permitting the passage through it of light rays coming from the extractor sheet until reaching the diffuser sheet, as well as permitting the passage of the rays of light coming from the light emitting means distributed around the perimeter.

3. Luminaire for vehicle roofs according to claim 1, **characterised in that** the luminaire adapts to the curving surface configuration of the roof.

4. Luminaire for vehicle roofs according to claim 2, **characterised in that** the light emitting element is a light guide (2.5) disposed perimetrally matching up with the edge of the transparent central sheet (2.2) which is supplied in turn at one end, at least, by at least one point power source (2.6).

5. Luminaire for vehicle roofs according to claim 4, **characterised in that** the assembly formed of the layered panel and the light guide is fastened by a lateral support (2.4), which houses the light guide as well as the edge of the layered panel.

6. Luminaire for vehicle roofs according to claim 5, **characterised in that** the means of fastening the luminaire to the roof area are means of bonding the upper sheet or the lateral support to a roof element, which may either be a transparent element or the roof panel area.

7. Luminaire for vehicle roofs according to claim 5, **characterised in that** the means of fastening the luminaire to the roof area is by means of a mechanical anchorage to the roof panel by the lower sheet or support.

8. Luminaire for vehicle roofs according to claim 5, **characterised in that** the means of fastening the luminaire to the roof area by means of a combination of means of bonding the upper sheet or lateral support to a roof element, and means of mechanical anchoring to the roof panel by the lower sheet or support.

9. Luminaire for vehicle roofs according to claim 5, **characterised in that** the lateral support (2.4) is formed of an upper piece and a lower piece joined together, for instance by means of clipping, being provided internally by means of press-fit support shoulders.

10. Luminaire for vehicle roofs according to claim 4, **characterised in that** the light source (2.6) is a LED.

11. Luminaire for vehicle roofs according to claim 10, **characterised in that** the light guide (2.5) is over-injected on the LED at one of its ends.

12. Luminaire for vehicle roofs according to claim 2, **characterised in that** the light emitting element is composed of a plurality of light sources (2.6) distributed around the perimeter of the layered panel, duly supplied.

13. Luminaire for vehicle roofs according to claim 12, **characterised in that** the means of supply of a plurality of light sources (2.6) distributed around the perimeter of the panel is conductor strips (2.7) which in turn acts as a support for the light source(2.6), connected to the strips be means of contact pads (2.6.1).

14. Luminaire for vehicle roofs according to claim 12, **characterised in that** the means of supply of the plurality of light sources (2.6) distributed around the perimeter of the panel is a single conductor connecting up the light sources (2.6) in series.

15. Luminaire for vehicle roofs according to claim 12, **characterised in that** the light source is a LED.

16. Luminaire for vehicle roofs according to claim 12, **characterised in that** the light source (2.6) is situated at an inlet in the layered panel.

17. Luminaire for vehicle roofs according to claim 12, **characterised in that** the means of fastening the luminaire to the roof area is by way of bonding the upper sheet to a roof element, which may either be a transparent element or the roof panel area.

18. Luminaire for vehicle roofs according to claim 12, **characterised in that** the means of fastening the luminaire to the roof area is by way of a mechanical anchorage to the roof panel by lower sheet.

19. Luminaire for vehicle roofs according to claim 12, **characterised in that** the means of fastening the luminaire to the roof area is by way of a combination of means of bonding the upper sheet to an element of the roof, and means of mechanical anchorage to the roof panel by the lower sheet.

20. Luminaire for vehicle roofs according to any of the foregoing claims, **characterised in that** the lower sheet is discontinued in certain areas, where another type of sheet is disposed that will produce optical effects.

21. Luminaire for vehicle roofs according to any of the foregoing claims, **characterised in that** the upper portion of the luminaire is in contact with a transparent element, acting as a sun roof or the like, and the exterior of the vehicle may be observed.

22. Luminaire for vehicle roofs according to claim 1, **characterised in that** the layered panel adopts a multilaminate configuration in which transparent sheets are disposed above and below the extractor and diffuser sheets that confer greater strength on the assembly.

23. Luminaire for vehicle roofs according to claim 1 or 2 or 22, **characterised in that**, besides the extractor sheet (2.1) and the diffuser sheet (2.3), the layered panel has an electrochromic sheet, which may be darkened at discretion.
